# EUROPÄISCHE PATENTSCHRIFT

(11) **EP 0 980 645 B1**
(45) Veröffentlichungstag und Bekanntmachung des Hinweises auf die Patenterteilung: **30.07.2008**
(21) Anmeldenummer: 99115797.5
(22) Anmeldetag: 11.08.1999
(51) Int. Cl.: A01D 89/00

(54) **Aufnahmetrommel für Halmgut**
Pick-up
Tambour de ramassage

(30) Priorität: 17.08.1998 DE 19837122
(43) Veröffentlichungstag der Anmeldung: 23.02.2000
(73) Patentinhaber: Welger Maschinenfabrik GmbH, 38304 Wolfenbüttel (DE)
(72) Erfinder: Martensen, Klaus, Dr.-Ing., 38304 Wolfenbüttel (DE)

(56) Entgegenhaltungen:
- EP-A- 0 364 001
- DE-B- 1 166 543
- US-A- 4 453 375

## Beschreibung

Die Erfindung betrifft eine Aufnahmetrommel für Halmgut, bestehend aus umlaufenden Zinkenträgern und ortsfesten Leitblechen darüber, durch die Zinken greifen.

Die vorstehend beschriebene Aufnahmetrommel läßt sich der DE 37 33 210 C1 entnehmen. Für Stroh, Heu und Silage arbeitet diese Aufnahmetrommel zufriedenstellend, jedoch treten beim Aufsammeln einiger Halmgüter, insbesondere Flachs und Hanf, erhebliche Funktionsprobleme auf, weil das faserige Material durch die Schlitze zwischen den Leitbiechen ins Innere der Aufnahmetrommel dringt, sich um die Federwindungen der Zinken bzw. die Tragelemente der Zinken legt und verstärkt eingezogen wird.

Durch die DE 3340685 A1 ist eine Aufnahmetrommel mit gesteuerten Zinken bekanntgeworden, deren Zinkenträger statt von einzelnen Leitblechen, von einem mit ihnen umlaufenden, zylindrischen Trommelmantel umschlossen sind, der jeweils einen Durchtrittsschlitz pro Zinken mit einer Länge entsprechend seinem Schwenkbereich aufweist. Da die Schlitzlänge insgesamt kleiner ist als bei durchgehenden Umfangsschlitzen, dringt weniger Material ins Innere der Trommel ein, kann jedoch auch schlechter herausfallen. Noch nachteiliger ist jedoch, daß sich besonders leicht Material in dem Anfangs- und Endbereich jedes Schlitzes verfängt, so daß auch diese Aufnahmetrommel für Flachs und Hanf ungeeignet ist.

Aufgabe der vorliegenden Erfindung ist es, die Aufnahmetrommel der eingangs genannten Art derart zu verbessern, daß sich auch faseriges Material, wie Flachs und Hanf, störungsfrei aufnehmen läßt. Außerdem soll die Lösung leicht nachrüstbar sein für vorhandene Aufnahmetrommeln.

Zur Lösung dieser Aufgabe sieht die Erfindung vor, daß jeder Zinkenträger einzeln oder alle Zinkenträger gemeinsam von wenigstens einer mit den Zinkenträgern umlaufenden Abdeckung umschlossen ist / sind, welche Durchtrittsöffnungen für die Zinken aufweist.Durch die erfindungsgemäße Ausgestaltung der Aufnahmetrommel mit einer Abdeckung wird ein Eindringen problematischer Halmgüter in den Umlaufbereich der Zinkenträger sicher vermieden, so daß sich kein Material mehr zwischen den Federwindungen der Zinken bzw. an deren Befestigungsmittel verfangen oder sich um die Zinkenträger wickeln kann. Ohne jeglichen Umbau ist die Abdeckung nach Abnahme der Leitbleche auf einfache Weise in vorhandenen Aufnahmetrommeln einbaubar.

Eine besonders günstige Ausbildung wird dadurch erzielt, daß die Abdeckung ein in Umfangsrichtung nachgiebiges, mantelartiges Element ist, das alle Zinkenträger unter leichtem Zug umspannt. Die Nachgiebigkeit gestattet einerseits kleinste Durchtrittsöffnungen entsprechend dem Zinkendurchmesser und vermeidet gleichzeitig Berührungen der Abdeckung mit den Leitblechen. Die Bandenden können auf einfachste Weise werkzeuglos mit an sich bekannten Schnellverschlüssen, z. B. Klettverschluß verbunden werden.

Eine Ausgestaltung der Abdeckung gemäß Anspruch 4 verzichtet auf Verschlüsse und ist sowohl besonders leicht montierbar als auch kostengünstig. Das in Längsrichtung geschlitzte Rohr wird in Umfangsrichtung gespreizt und über den Zinkenträger so geschoben, daß die in Reihe nebeneinander angeordneten Zinken im Rohrschlitz liegen, der sich aufgrund der Flexibilität des Rohres auf Zinkendurchmesser verkleinert, so daß ein kleiner Längsspalt verbleibt, was aber keine Nachteile hat.

Weitere zweckmäßige Ausbildungen der Abdeckung der Zinkenträger bzw. des Trommelinnenraumes sind in den Unteransprüchen gekennzeichnet.

In der Zeichnung sind einige Beispiele des Erfindungsgegenstandes dargestellt. Hierbei zeigen:
- Fig. 1: eine Seitenansicht einer Aufnahmetrommel mit einer erfindungsgemäßen Abdeckung,
- Fig. 2: eine Teilvorderansicht einer Aufnahmetrommel gemäß Fig. 1, wobei zwei Leitbleche zur besseren Veranschaulichung der Abdeckung weggelassen sind und die
- Fig. 3 und 4, sowie 5 und 6: jeweils eine Ansicht gemäß Fig. 1 und 2, jedoch mit anderen Ausführungsformen.

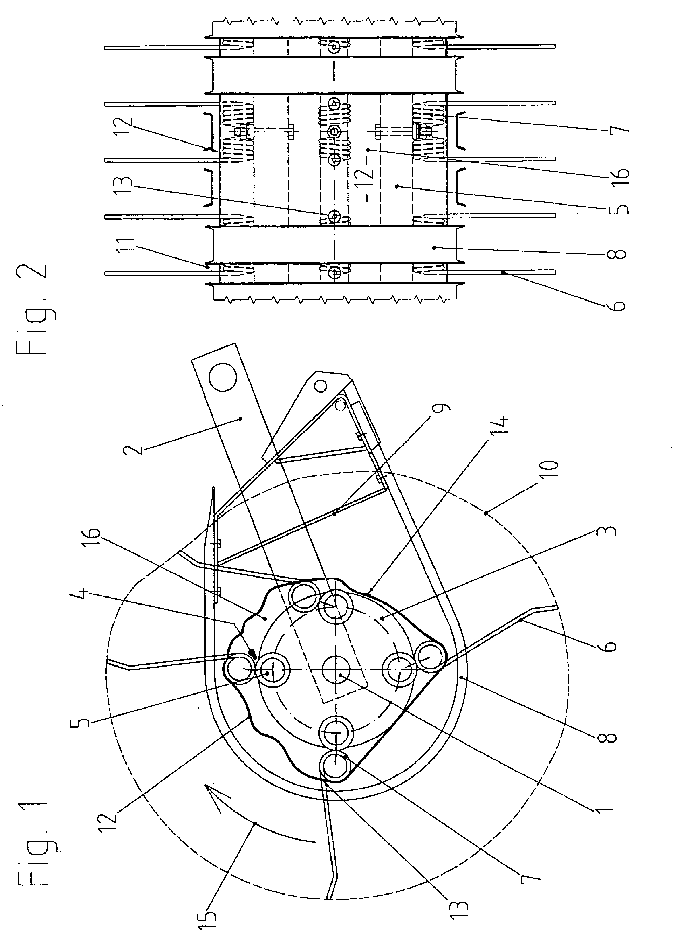

Die in den Fig. 1 und 2 dargestellte Aufnahmetrommel weist eine zentrale Antriebswelle 1 auf, die sich über die gesamte Trommelbreite erstreckt und beidseitig in je einem Tragarm 2 drehbar gelagert ist. Die Welle 1 wird in üblicher Weise von außen angetrieben. Auf der Welle 1 ist endseitig je eine Scheibe 3 befestigt, in der vier Zinkenträger 4 drehbar gelagert sind. Die Zinkenträger 4 bestehen jeweils aus einem Rohr 5 und tragen mehrere, mit Abstand nebeneinander angeordnete Federzinken 6, deren Doppelwendeln 7 mittels Schrauben an dem Rohr 5 befestigt sind. Die Zinkenträger 4 sind in der Scheibe 3 rotationssymmetrisch auf einem Kreis um die Welle 1 angeordnet. Der von den Zinkenträgern 4 gebildete Rotationskörper ist von einzelnen, im Abstand nebeneinander angebrachten Leitblechen 8 umgeben, die im hinteren Bereich an einem Trommel-Tragrahmen 9 befestigt sind. Die Zinken 6 durchgreifen während ihres förderwirksamen Abschnittes ihrer Umlaufbahn 10 Vollschlitze 11 des aus den einzelnen Leitblechen 8 gebildeten Trommelmantels, während die Zinken 6 in einem anderen, hinteren Bereich sich in die Vollschlitze 11 zurückziehen. Diese gesteuerte Drehbewegung der Zinkenträger 4 bei ihrem Umlauf wird über endseitig an den Zinkenträgern 4 befestigt, nicht dargestellte Steuerlenker erreicht, die mit einer ebenfalls nicht dargestellten Kurvenbahn in bekannter Weise zusammenwirken.

Bei dem in Figur 1 dargestellten Ausführungsbeispiel sind alle Zinkenträger 4 von einer handelsüblichen Gewebebahn 12, z. B. LKW-Abdeckplane, ummantelt. Die Gewebebahn 12 ist entsprechend der Zinkenanzahl der Aufnahmetrommel und entsprechend dem Zinkendurchmesser gelocht so ausgestaltet und dimensioniert, daß sie in der Breite den gesamten Zinkenträger 4 überdeckt und etwa die vierfache Länge des maximalen Umfangsabstandes zweier Zinken 6 aufweist. Zur Montage der Gewebebahn 12 sind die Leitbleche 8 demontiert. Die Gewebebahn 8 wird zunächst mit ihren Öffnungen 13 über die Zinken 6 eines Zinkenträgers 4 und nacheinander über die restlichen Zinkenträger 4 gezogen. Die Enden der Gewebebahn 12 haften z. B. durch Druckknöpfe 14 zusammen. Anschließend werden alle Leitbleche 8 wieder montiert.

Während des Betriebes der Aufnahmetrommel laufen die Zinken 6 in Richtung des Pfeiles 15 um. Die Zinkenspitzen bewegen sich dabei entlang der Umlaufbahn 10. Die Gewebebahn 12 wird entsprechend den Bewegungen der Zinken 6 gefaltet und wieder auseinandergezogen.

Wie aus Fig. 2 ersichtlich, schirmt die Gewebebahn 12 den gesamten Innenraum 16 der Aufnahmetrommel und insbesondere die Doppelwendeln 7 und Rohre 5 gegen Eindringen von Materialfasern ab. Durch die relativ kleinen Durchtrittsöffnungen 13 für die Zinken 6 kommt kein Material nach innen. Versuche in der Praxis mit Flachs und Hanf haben zu keinerlei Funktionsstörungen geführt.

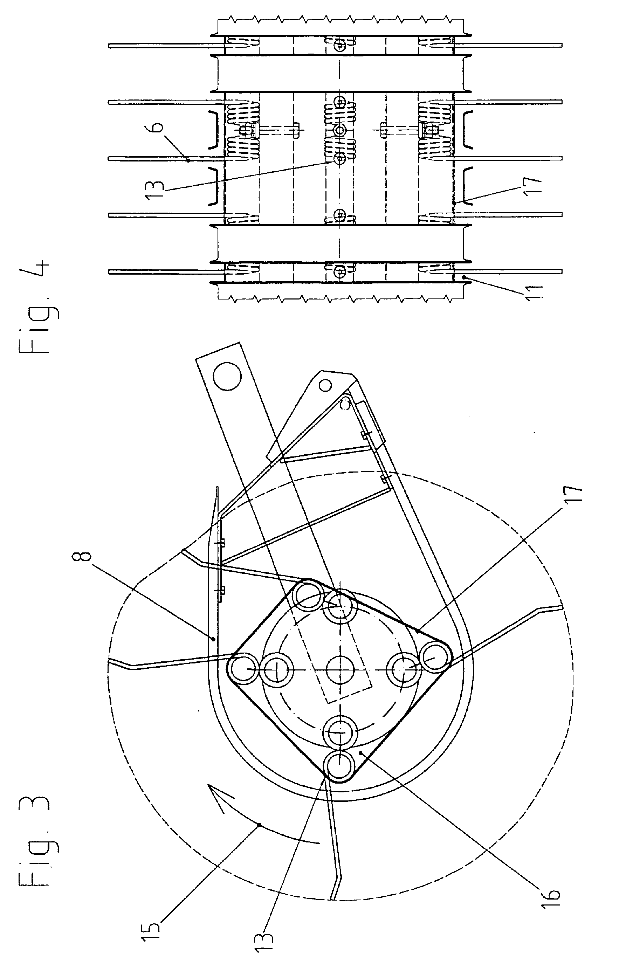

Die Ummantelung kann auch eine in Umfangsrichtung elastische Gewebebahn 17 sein mit einer Gesamtlänge, die so bemessen ist, daß sie während der Bewegung der Zinken 6 entlang ihrer Umlaufbahn 10 immer unter leichtem Zug am Außenumfang der Doppelwendeln 7 anliegt, wie aus Figur 3 ersichtlich. Material, das eventuell durch die Vollschlitze 11 der Leitbleche 8 gelangt, wird während des Umlaufes der Zinkenträger 4 wieder aus dem Bereich zwischen Gewebebahn 17 und Leitblechen 8 hinausgefördert. Der von der Gewebebahn 17 umschlossene Innenraum bleibt frei von Materialansammlungen.

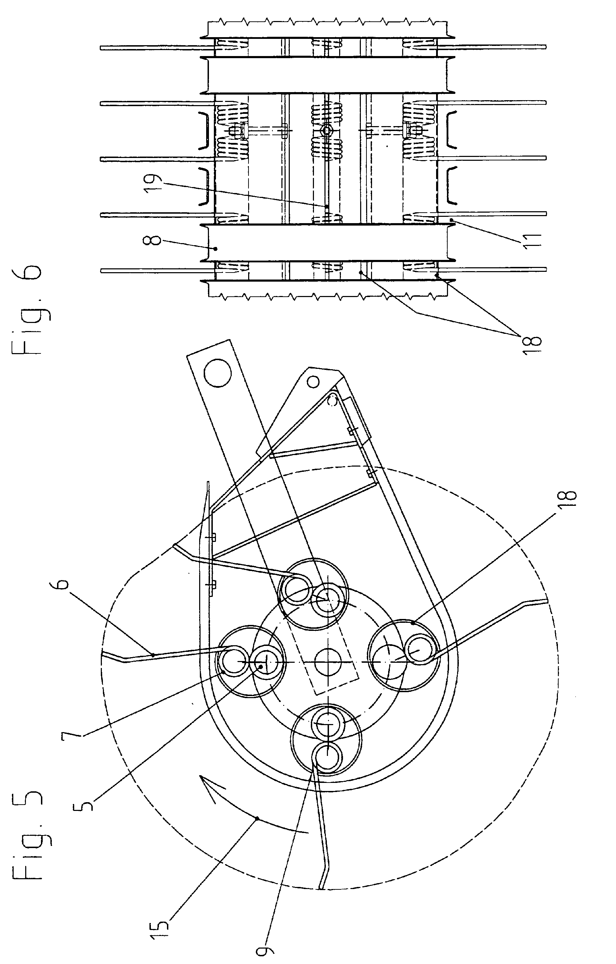

Jeder einzelne Zinkenträger 4 kann auch von einem Rohr 18 ummantelt sein, welches ebenso das Unterkriechen von Material verhindert, wie aus Fig. 5 und 6 ersichtlich. Ein Kunststoffrohr 18, z. B. aus Polypropylen, hat etwa die Länge des Zinkenträgers 4 und einen Durchmesser, der etwas größer ist als die Außendurchmesser der Doppelwendeln 7 und des Rohres 5 zusammen. Es ist in Längsrichtung geschlitzt, so daß es zur Montage auseinandergespreizt um Rohr 5 und Doppelwendel 7 geführt werden kann und sich anschließend auf eine Spaltweite entsprechend dem Zinkendurchmesser verkleinert, d. h. der Längsschlitz 19 fluchtet mit den nebeneinander angeordneten Zinken 6. Der relativ kleine Längsschlitz 19 verursacht keine Probleme bezüglich des Materialeintrittes. Ausnehmungen im Kunststoffrohr 18 entsprechend dem Zinkendurchmesser sind möglich, verteuern aber eine solche Ummantelung.

Im Rahmen der Erfindung ist auch möglich, z. B. zwei bzw. vier Kunststoffschalen entsprechend dem Unfangsabschnitt zwischen zwei Zinken in deren Zwischenräume zu legen, was sich besonders bei Aufnahmetrommeln mit ungesteuerten Zinken anbietet. Durch Umfangsbandagen werden die einzelnen Umfangsabschnitte zusammengehalten. Ferner kann das Kunststoffrohr auch in axialer Richtung mehrfach geteilt sein, was bei geteilten Aufnahmetrommeln notwendig ist. Kürzere Rohrabschnitte sind darüber hinaus auch einfacher zu montieren.

## Patentansprüche

1. Aufnahmetrommel für Halmgut, bestehend aus umlaufenden Zinkenträgern (4) und ortsfesten Leitblechen (8) darüber, durch die Zinken (6) greifen, **dadurch gekennzeichnet, daß** jeder Zinkenträger (4) einzeln oder alle Zinkenträger (4) gemeinsam von wenigstens einer mit den Zinken (6) umlaufenden Abdeckung (12,17,18) umschlossen ist / sind, welche Durchtrittsöffnungen (13,19) für die Zinken (6) aufweist.

2. Aufnahmetrommel nach Anspruch 1, **dadurch gekennzeichnet, daß** die Abdeckung ein lose um alle Zinkenträger (4) geschlungenes, mantelartiges Element (12) ist.

3. Aufnahmetrommel nach Anspruch 1, **dadurch gekennzeichnet, daß** die Abdeckung ein in Umfangsrichtung nachgiebiges, mantelartiges Element (17) ist, das alle Zinkenträger (4) unter leichtem Zug umspannt.

4. Aufnahmetrommel nach Anspruch 1, **dadurch gekennzeichnet, daß** die Abdeckung ein flexibles, in Längsrichtung geschlitztes Rohr (18) ist.

5. Aufnahmetrommel nach einem oder mehreren der Ansprüche 1 bis 4, **dadurch gekennzeichnet, daß** die Abdeckung (12,17) zur Montage bzw. Demontage Schnellverschlüsse (14) aufweist.

6. Aufnahmetrommel nach einem oder mehreren der vorhergehenden Ansprüche 1 bis 4, **dadurch gekennzeichnet, daß** die Abdeckung nach Art eines Endlosschlauches ausgebildet ist.

7. Aufnahmetrommel nach einem oder mehreren der Ansprüche 1 bis 5, **dadurch gekennzeichnet, daß** die Abdeckung (12,17,18) in Umfangsrichtung und / oder Axialrichtung mehrteilig ausgeführt ist.

8. Aufnahmetrommel nach einem oder mehreren der vorhergehenden Ansprüche, **dadurch gekennzeichnet, daß** die Durchtrittsöffnungen (13,19) der Abdeckung (12,17,18) jeweils gleich oder etwas größer als der Durchmesser eines Zinkens (6) sind, und daß die Länge der Abdeckung (12,17,18) etwa der Länge der Zinkenträger (4) entspricht.

9. Aufnahmetrommel nach einem oder mehreren der vorhergehenden Ansprüche, **dadurch gekennzeichnet, daß** die Zinken (4) während ihres Umlaufes ungesteuerte Bewegungen ausführen.

10. Aufnahmetrommel nach einem oder mehreren der vorhergehenden Ansprüche, **dadurch gekennzeichnet, daß** die Zinken (4) während ihres Umlaufes gesteuerte Bewegungen ausführen

## Claims

1. A receiving drum for stalk material, consisting of revolving tine holders (4) and fixed baffle plates (8) thereover, through which tines (6) extend, **characterised in that** each tine holder (4) individually or all the tine holders (4) together is/are surrounded by at least one covering means (12, 17, 18) which rotates with the tines (6), which covering means has passage openings (13, 19) for the tines (6).

2. A receiving drum according to Claim 1, **characterised in that** the covering means is a casing-like element (12) which is wrapped loosely around all the tine holders (4).

3. A receiving drum according to Claim 1, **characterised in that** the covering means is a casing-like element (17) which is resilient in the peripheral direction and which encompasses all the tine holders (4) under slight tension.

4. A receiving drum according to Claim 1, **characterised in that** the covering means is a flexible tube (18) slotted in the longitudinal direction.

5. A receiving drum according to one or more of Claims 1 to 4, **characterised in that** the covering means (12, 17) has quick-release closure means (14) for mounting and de-mounting.

6. A receiving drum according to one or more of the preceding Claims 1 to 4, **characterised in that** the covering means is formed in the manner of an endless tube.

7. A receiving drum according to one or more of Claims 1 to 5, **characterised in that** the covering means (12, 17, 18) is made in several parts in the peripheral direction and/or axial direction.

8. A receiving drum according to one or more of the preceding claims, **characterised in that** the passage openings (13, 19) in the covering means (12, 17, 18) are each equal to or somewhat larger than the diameter of a tine (6), and that the length of the covering means (12, 17, 18) corresponds approximately to the length of the tine holders (4).

9. A receiving drum according to one or more of the preceding claims, **characterised in that** the tines (4) perform uncontrolled movements during their revolution.

10. A receiving drum according to one or more of the preceding claims, **characterised in that** the tines (4) perform controlled movements during their revolution.

## Revendications

1. Tambour de ramassage pour des produits en tiges, se composant de barres porte-dents (4) rotatives et de déflecteurs stationnaires (8) par-dessus, que traversent des dents (6), **caractérisé en ce que** chaque barre porte-dents (4) individuellement ou toutes les barres porte-dents (4) ensembles est/sont entourée(s) par au moins un recouvrement (12, 17, 18) rotatif avec les dents (6), lequel recouvrement présente des ouvertures de passage (13, 19) pour les dents (6).

2. Tambour de ramassage selon la revendication 1, **caractérisé en ce que** le recouvrement est un élément (12) semblable à une enveloppe enroulé de manière lâche autour de toutes les barres porte-dents (4).

3. Tambour de ramassage selon la revendication 1, **caractérisé en ce que** le recouvrement est un élément (17) semblable à une enveloppe déformable en direction périphérique, lequel élément entoure toutes les barres porte-dents (4) avec une légère traction.

4. Tambour de ramassage selon la revendication 1, **caractérisé en ce que** le recouvrement est un tuyau souple fendu longitudinalement (18).

5. Tambour de ramassage selon l'une quelconque ou plusieurs des revendications 1 à 4, **caractérisé en ce que** le recouvrement (12, 17) présente des fermetures instantanées (14) pour le montage et/ou le démontage.

6. Tambour de ramassage selon l'une quelconque ou plusieurs des revendications 1 à 4 précédentes, **caractérisé en ce que** le recouvrement est réalisé à la manière d'un tuyau sans fin.

7. Tambour de ramassage selon l'une quelconque ou plusieurs des revendications 1 à 5, **caractérisé en ce que** le recouvrement (12, 17, 18) est réalisé en plusieurs pièces en direction périphérique et/ou en direction axiale.

8. Tambour de ramassage selon l'une quelconque ou plusieurs des revendications précédentes, **caractérisé en que** les ouvertures de passage (13, 19) du recouvrement (12, 17, 18) sont respectivement de la même taille ou un peu plus grandes que le diamètre d'une dent (6), et en ce que la longueur du recouvrement (12, 17, 18) correspond à peu près à la longueur des barres porte-dents (4).

9. Tambour de ramassage selon l'une quelconque ou plusieurs des revendications précédentes, **caractérisé en ce que** les dents (4) effectuent des mouvements non contrôlés lors de leur rotation.

10. Tambour de ramassage selon l'une quelconque ou plusieurs des revendications précédentes, **caractérisé en ce que** les dents (4) effectuent des mouvements contrôlés lors de leur rotation.
